## Europäisches Patentamt
(19) **European Patent Office**

**Office européen des brevets**

(11) Veröffentlichungsnummer: **0 056 222**
**B1**

(12) # EUROPÄISCHE PATENTSCHRIFT

(45) Veröffentlichungstag der Patentschrift: **27.12.84**

(51) Int. Cl.³: **F 16 K 1/226**, F 16 J 15/32

(21) Anmeldenummer: **81890171.2**

(22) Anmeldetag: **20.10.81**

(54) **Absperrklappe.**

(30) Priorität: **14.01.81 AT 109/81**

(43) Veröffentlichungstag der Anmeldung:
**21.07.82 Patentblatt 82/29**

(45) Bekanntmachung des Hinweises auf die Patenterteilung:
**27.12.84 Patentblatt 84/52**

(84) Benannte Vertragsstaaten:
**CH DE FR GB IT LI SE**

(56) Entgegenhaltungen:
**CH - A - 621 397**
**DE - B - 1 177 433**
**DE - B - 1 192 894**
**DE - C - 683 454**
**FR - A - 2 385 958**
**GB - A - 756 460**

**MASCHINENMARKT, 84 (1978) 46, Würzburg, F. STROHMER und N. LUKESCH "Dichtprobleme und ihre Lösung bei grossen Absperrklappen", Seiten 913-916**

(73) Patentinhaber: **VOEST-ALPINE Aktiengesellschaft, Werksgelände, A-4010 Linz (AT)**

(72) Erfinder: **Lukesch, Norbert, Unionstrasse 65/4, A-4020 Linz (AT)**
Erfinder: **Kapeller, Josef, St-Ulrich 3, A-4120 Neufelden (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

**Beschreibung**

Die Erfindung bezieht sich auf eine Absperrklappe mit im Klappengehäuse eingesetzten Lagerbüchsen für die den Klappenteller tragende Klappenwelle, welche Lagerbüchsen jeweils am Aussenmantel zwei Umfangsnuten zum Einlegen von Dichtringen und zwischen diesen Umfangsnuten zwei diametral gegenüberliegende Axialnuten zum Einlegen von Dichtstegen aufweisen, wobei die innere Umfangsnut im Bereich des Klappengehäuses und die äussere Umfangsnut im Bereich der das ins Klappengehäuseinnere vorragende Lagerbüchsenende übergreifenden Nabe des Klappentellers gelegen sind und wobei die beiden Axialnuten im Bereich der durch die Schliessstellung des Klappentellers definierten Axialebene angeordnet sind.

Absperrklappen haben sich als Sicherheits- und Steuerorgane mit hydraulischem, mechanischem oder gewichtsbetätigtem Antrieb im Leitungs- und Turbinenbau durchaus bewährt, wobei aber insbesondere bei grossen Absperrklappen wegen der Notwendigkeit einer axialen und radialen Dichtung und einer von der Stellung des Klappentellers abhängigen bzw. in gewissen Klappentellerstellungen nicht zentrisch-symmetrischen Druckverteilung Schwierigkeiten der Abdichtung zwischen Klappenteller, Klappengehäuse und Klappenwellenlagerung auftreten. Zum Abdichten dieses für die Dichtheit einer Klappe kritischen Punktes ist es bekannt [Maschinenmarkt, Würzburg, 84 (1978) 46, F. STROHMER und N. LUKESCH, «Dichtprobleme und ihre Lösung bei grossen Absperrklappen», Seiten 913 -916, siehe Bild 8], die beiden Lagerbüchsen für die Klappenwelle am Aussenmantel jeweils mit zwei Umfangsnuten zur Aufnahme von Dichtringen zu versehen, von denen die eine Nut zur Abdichtung der Lagerbüchse gegenüber dem Klappengehäuse und die andere gegenüber dem Klappenteller bzw. dessen Nabe dienen. Diese beiden Umfangsnuten werden ausserdem durch zwei in der durch die Schliessstellung des Klappentellers definierten Axialebene liegende Axialnuten, in denen Dichtstege eingelegt sind, verbunden, so dass in Schliessstellung die Dichtringe in den Umfangsnuten die durch die Dichtstege gegebene axiale Abdichtung zwischen Teller und Lagerbüchsen sozusagen ergänzen und eine Begrenzung dieses kritischen Dichtbereiches mit sich bringen. Bisher nehmen allerdings die Nuten der Lagerbüchsen einfache Dichtringe und Dichtstege aus gewebeverstärktem Gummi oder dgl. auf und der hohe Reibungskoeffizient zwischen diesem Dichtungsmaterial und dem der Dichtung des Klappentellers selbst bzw. dem Metall des Tellers führt einerseits bei geringem Übermass der Dichtungen zu einem Eindringen des Arbeitsmediums in das Lager und in Querrichtung zum geschlossenen Klappenteller, welche Leckagen bei Betätigung der Klappe wegen des unvermeidlichen Lagerspiels zwischen Welle und Lager besonders gross sind, und anderseits bei ausreichendem Übermass zur Vermeidung von Leckagen zu Verquetschungen der Dichtungen und damit zu deren frühzeitigen Zerstörung, zu einem Zusammenkleben bei längerem Stillstand, d.h. längerem stationären Betrieb und zur Notwendigkeit grosser Antriebsleistungen, die wiederum überdimensionierte Betätigungsaggregate erforderlich machen und einen gewichtsbetätigten Antrieb beispielsweise für Rückschlagklappen überhaupt ausschliessen.

Gemäss der GB-A-756 460 gibt es zur Abdichtung von Kolben bzw. Kolbenstangen und Zylindern auch schon Dichtungen aus zwei übereinanderliegenden Dichtringen, von denen der obere aus Polytetrafluoräthylene besteht. Dadurch werden zwar die Reibungsverhältnisse verbessert, doch lassen sich mit diesen geschlossenen Ringen keine Längenänderungen ohne Beeinflussung der Dicht- und Gleiteigenschaften ausgleichen, so dass sie für Absperrklappen ungeeignet sind.

Der Erfindung liegt somit die Aufgabe zugrunde, diese Mängel zu beseitigen und eine Absperrklappe der eingangs geschilderten Art zu schaffen, die sich trotz hoher Lebensdauer und langen Wartungsintervallen durch ihre bleibende Dichtheit und vergleichsweise leichtgängige Betätigung auszeichnet.

Die Erfindung löst diese Aufgabe dadurch, dass die äussere Umfangsnut zwei übereinanderliegende Dichtringe aufnimmt, von denen der obere aus einem PTFE-(Polytetrafluoräthylene)-Streifen oder dgl. besteht, der schmäler als die ihn aufnehmende äussere Umfangsnut ist und mit seinen freien Enden einen zur Umfangsrichtung schrägen Stoss bildet, wodurch ein seitliches Verschieben der Streifenenden erlaubt ist, so dass der zu einem Dichtring geschlossene Streifen sich an Längenänderungen anpassen kann, ohne ein Klaffen des Stosses zu verursachen.

Da zwischen Lagerbüchse und Klappengehäuse keine Relativbewegung auftritt, bietet auch die Abdichtung zwischen Lagerbüchse und Klappengehäuse keine Schwierigkeiten und es können durchaus übliche Dichtringe, beispielsweise aus Gummi oder ähnlichem Material in die entsprechende innere Umfangsnut der Lagerbüchse eingelegt sein. Um hingegen die gewünschte Dichtwirkung auch zwischen Lagerbüchse und Klappenteller zu erreichen, ist in der äusseren Umfangsnut über einen unteren, beispielsweise ebenfalls aus Gummi oder ähnlichem Material bestehenden geschlossenen Dichtring als zweiter Dichtring ein Streifen aus PTFE oder einem Werkstoff ähnlicher Eigenschaften lose aufgelegt, der auch bei hoher Anpresskraft einen niedrigen Reibungskoeffizienten aufweist. Die Breitenunterschiede zwischen Nut und Streifen erlauben ausserdem zusammen mit dem schrägen Stoss ein seitliches Verschieben der den Stoss bildenden Streifenenden und gewährleisten eine Längenanpassung der Dichtung ohne Leckgefahr. Durch die Kombination aus dem PTFE-Streifen und dem darunterliegenden Dichtring entsteht somit eine Dichtung, die, abgesehen von dem geringen Reibungskoeffizienten, in radialer Richtung um mehr als das Spiel zwischen Welle und Lager nachgeben kann, immer mit konstanter Kraft auswärts gepresst wird, unabhängig von Längenänderungen immer gleichmässig an den Dichtflächen anliegt und immer eine absolute Dichtheit gewährleistet.

In einer günstigen Weiterbildung der Erfindung reichen die Axialnuten bis über die Umfangsnuten hinaus und die in sie eingelegten Dichtstege weisen im Kreuzungsbereich mit den Umfangsnuten entsprechende Ausnehmungen auf, die eine spielfreie Fassung für die Dichtringe bilden. Das einander Überkreuzen von Dichtringen und Dichtstegen sorgt für einen dichten Übergangsbereich von der axialen Dichtung zur Umfangsdichtung, so dass sich in Schliessstellung des Klappentellers keine eine Leckage nach sich ziehende Undichtheit einstellt. Dabei ergibt gleichzeitig die entsprechende Ausnehmung eine gewünschte Halterung für den losen PTFE-Streifen, die ein Wandern dieses Streifens in Umfangsrichtung sicher verhindert, dessen Längenausgleich durch das seitliche Spiel zwischen Streifen und Umfangsnut im Lager aber nicht beeinflusst. Ein solches Wandern des PTFE-Streifens muss nämlich auf jeden Fall unterbunden werden, damit der Stoss dieses Streifens nicht in den Kreuzungsbereich gelangt und zu Undichtheiten führen kann.

Vorteilhaft ist es weiters, wenn erfindungsgemäss die Dichtstege im axialen Berührungsbereich mit dem Klappenteller bzw. dessen Nabe in Umfangsrichtung Anfasungen aufweisen. Da bei der Schliessbewegung des Klappentellers dessen Rand knapp vor Erreichen der Schliessstellung die Dichtstegkanten überstreicht, gewährleisten diese Anfasungen, dass es dabei zu keinem Verquetschen des Dichtsteges kommt, wodurch sich die Lebensdauer entsprechend verlängert und vor allem auch die feste und unbewegliche Lage der Stege in den Axialnuten ungefährdet bleibt, die für die Dichtheit des Kreuzungsbereiches zwischen Dichtstegen und Dichtringen wesentlich ist.

Besitzen die Dichtstege ausserdem eine Stahleinlage, ist eine weitere Steigerung der Sicherheit gegen Verschiebungen der Dichtstege in den Axialnuten möglich und ausserdem eine bei höheren Drücken des Arbeitsmediums erforderliche Steifheit des Steges gegeben.

In der Zeichnung ist der Erfindungsgegenstand in einem Ausführungsbeispiel rein schematisch dargestellt, und zwar zeigen:

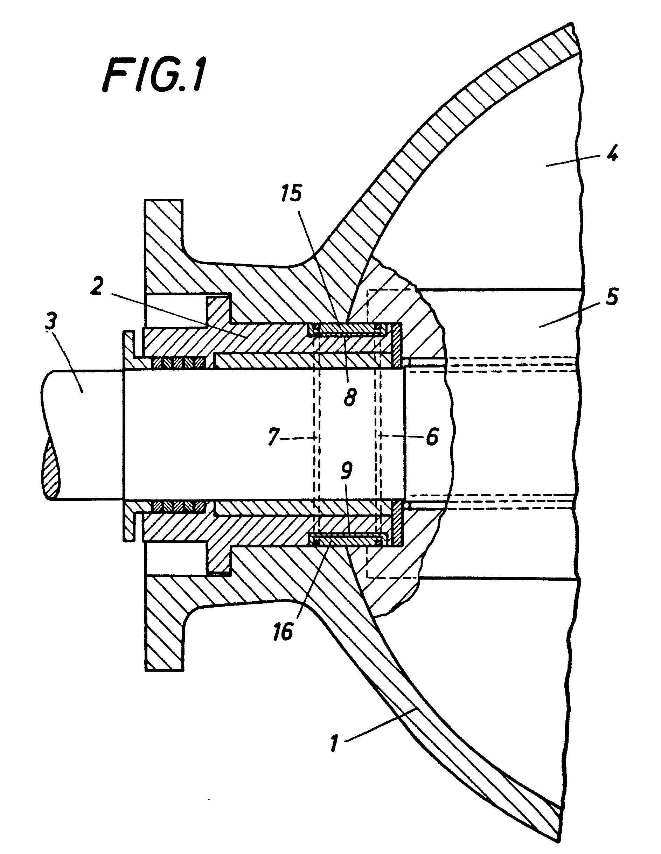

Fig. 1 einen Teil einer erfindungsgemässen Absperrklappe im Axialschnitt,

Fig. 2 im grösseren Massstab die Lagerbüchse dieser Absperrklappe in teilgeschnittener Ansicht,

Fig. 3 eine Ansicht nach Pfeil III der Fig. 2 und

Fig. 4 das Detail IV aus Fig. 2 in grösserem Massstab.

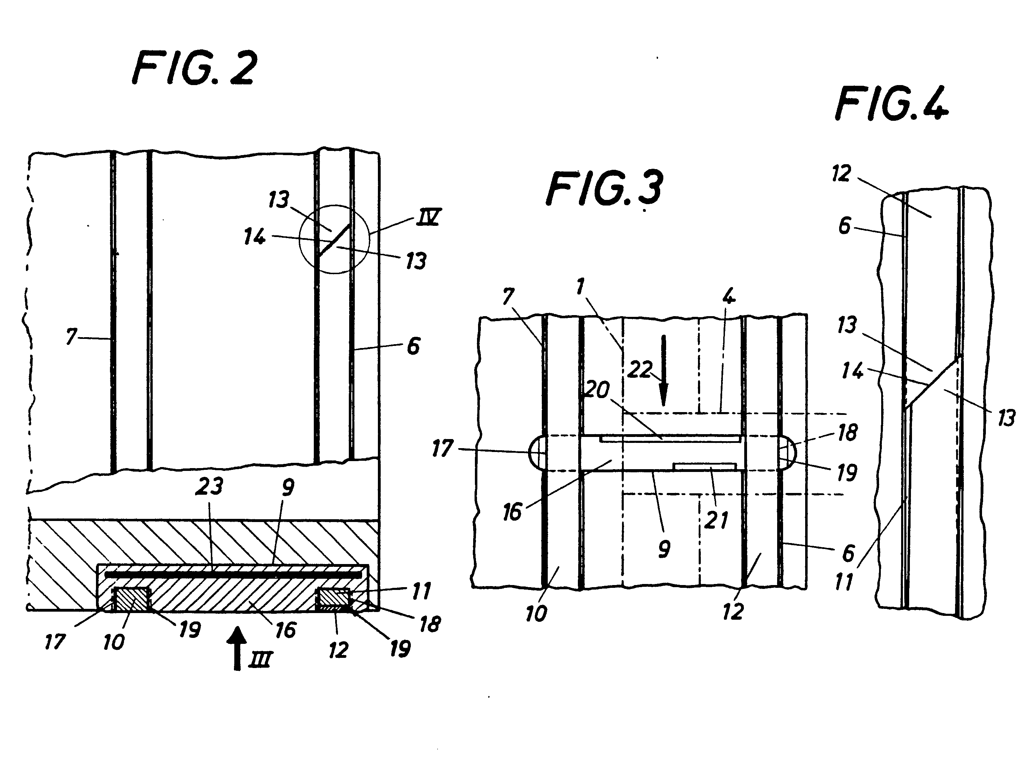

Im Gehäuse 1 einer Absperrklappe ist eine Lagerbüchse 2 für die Lagerung der Klappenwelle 3 eingesetzt. Diese Klappenwelle 3 trägt einen Klappenteller 4, der mit seiner Nabe 5 drehfest auf die Welle 3 aufgezogen ist und über diese Klappenwelle 3 verschwenkt werden kann. Die Lagerbüchse 2 ragt ins Innere des Klappengehäuses 1 und wird dort von der Nabe 5 des Klappentellers 4 übergriffen. Dieser Bereich zwischen Klappengehäuse 1, Lagerbüchse 2 und Klappenteller 4 bzw. Nabe 5 ist für die Dichtheit der Klappe der kritische Punkt, da sich, wie in Fig. 3, in der der Klappenteller 4 strichliert in Schliessstellung angedeutet ist, erkennbar, bei geschlossener Absperrklappe zwischen beiden Seiten des Klappentellers 4 ein zu einer Leckströmung zwischen Klappenteller 4 und Lagerbüchse 2 führender Druckunterschied aufbaut und sich ausser diesem Druckgefälle in Umfangsrichtung die Notwendigkeit ergibt, das Lager selbst gegenüber dem Betriebsmedium abzudichten. Um eine diesen Anforderungen voll genügende Abdichtung zu schaffen, sind an der Lagerbüchse 2 eine äussere Umfangsnut 6 und eine innere Umfangsnut 7 vorgesehen, die an einander diametral gegenüberliegenden, durch die Schliessstellung des Klappentellers 4 definierten Stellen über zwei Axialnuten 8, 9 miteinander in Verbindung stehen. Die Umfangsnut 7 nimmt nun einen üblichen Dichtring 10 aus Gummi oder ähnlichem Material auf, welche Dichtung unproblematisch ist, da zwischen Klappengehäuse 1 und Lagerbüchse 2 keine Relativbewegung erfolgt. In der äusseren Umfangsnut 6, mit der eine Abdichtung zwischen den sich relativ zueinander bewegenden Teilen, nämlich Lagerbüchse 2 und Klappenteller 4 bzw. Nabe 5, erreicht werden soll, sind hingegen zwei übereinanderliegende Dichtringe eingelegt, von denen der untere Dichtring 11 ebenfalls ein üblicher Gummiring oder dgl. ist, der obere Dichtring 12 hingegen aus einem PTFE-Streifen besteht, der lose auf den Gummiring 11 aufgelegt ist und mit seinen freien Enden 13 einen schräg zur Umfangsrichtung verlaufenden Stoss 14 bildet. Dieser PTFE-Streifen und der Gummiring 11 sind miteinander nicht verbunden und beide schmäler als die Breite der Nut 6. Dadurch können sich, wie in Fig. 4 angedeutet, die Enden 13 des Streifens seitlich verschieben, und ermöglichen, ohne ein Klaffen des Stosses 14 und einen damit zusammenhängenden Leckstrom zu verursachen, eine Längenanpassung, und der Gummiring 11 kann sich bei radialer Belastung seitlich ausdehnen.

In den Axialnuten 8, 9 sind zur Abdichtung zwischen dem Klappenteller 4 und der Lagerbüchse 2 in Schliessstellung des Klappentellers Dichtstege 15, 16 fest und unbeweglich eingesetzt. Diese Dichtstege 15, 16 sind im Kreuzungsbereich mit den Umfangsnuten 6, 7 mit Ausnehmungen 17, 18 versehen, in denen die Dichtringe 10, 11, 12 geführt sind, wobei auch der den Dichtring 12 bildende PTFE-Streifen eine spielfreie Fassung 19 bekommt. Durch diese spielfreien Fassungen ist nicht nur die Dichtheit der Kreuzungsbereiche zwischen Dichtstegen 15, 16 sowohl mit dem Dichtring 10 als auch mit den Dichtringen 11, 12 gewährleistet, sondern vor allem auch ein Wandern des Dichtringes 12 in Umfangsrichtung unterbunden, ohne einen Längenausgleich dieses Dichtringes 12 aufgrund des seitlichen Spiels zwischen PTFE-Streifen und Umfangsnut 6 zu behindern.

Damit die Dichtheit in diesen Kreuzungsbereichen keinesfalls gefährdet ist, müssen die Dichtstege 15, 16 fest und unbeweglich in den Axialnuten 8, 9 sitzen, auch wenn beim Schliessen des Klappentellers 4 kurz vor Erreichen der Schliessstellung der Klappenteller 4 die Dichtstege überstreicht. Um bei diesem Überstreichen einerseits ein Verquetschen der Dichtstege zu verhindern und anderseits diesen festen Sitz nicht zu beeinträchtigen, sind in den Dichtstegen 15, 16 Anfasungen 20, 21 vorgesehen, wobei die Anfasung 20, die bei der Schliessbewegung (Pfeil 22 in Fig. 3) vom Klappenteller berührt wird, entsprechend lang und die auf der anderen Seite liegende Anfasung 21, die lediglich mit der Nabe 5 zusammenzuwirken braucht, entsprechend kürzer ausgebildet ist. Zur Versteifung der Dichtstege 15, 16 kann ausserdem eine Stahleinlage 23 vorgesehen sein, die nicht nur die Dichtheit bei höheren Drücken, sondern auch einen besseren Sitz der Dichtstege in den Axialnuten 8, 9 mit sich bringt.

## Patentansprüche

1. Absperrklappe mit im Klappengehäuse (1) eingesetzten Lagerbüchsen (2) für die den Klappenteller (4) tragende Klappenwelle (3), welche Lagerbüchsen (2) jeweils am Aussenmantel zwei Umfangsnuten (6, 7) zum Einlegen von Dichtringen (10; 11, 12) und zwischen diesen Umfangsnuten zwei diametral gegenüberliegende Axialnuten (8, 9) zum Einlegen von Dichtstegen (15, 16) aufweisen, wobei die innere Umfangsnut (7) im Bereich des Klappengehäuses und die äussere Umfangsnut (6) im Bereich der das ins Klappengehäuseinnere vorragende Lagerbüchsenende übergreifenden Nabe (5) des Klappentellers gelegen sind und wobei die beiden Axialnuten (8, 9) im Bereich der durch die Schliessstellung des Klappentellers definierten Axialebene angeordnet sind, dadurch gekennzeichnet, dass die äussere Umfangsnut (6) zwei übereinanderliegende Dichtringe (11, 12) aufnimmt, von denen der obere (12) aus einem PTFE-(Polytetrafluoräthylene)-Streifen oder dgl. besteht, der schmäler als die ihn aufnehmende äussere Umfangsnut (6) ist und mit seinen freien Enden (13) einen zur Umfangsrichtung schrägen Stoss (14) bildet, wodurch ein seitliches Verschieben der Streifenenden erlaubt ist, so dass der zu einem Dichtring geschlossene Streifen sich in Längenänderungen anpassen kann, ohne ein Klaffen des Stosses zu verursachen.

2. Absperrklappe nach Anspruch 1, dadurch gekennzeichnet, dass die Axialnuten (8, 9) bis über die Umfangsnuten (6, 7) hinausreichen und die in sie eingelegten Dichtstege (15, 16) im Kreuzungsbereich mit den Umfangsnuten entsprechende Ausnehmungen (17, 18) aufweisen, die eine spielfreie Fassung (19) für die Dichtringe (10; 11, 12) bilden.

3. Absperrklappe nach Anspruch 1 oder 2, dadurch gekennzeichnet, dass die Dichtstege (15, 16) im axialen Berührungsbereich mit dem Klappenteller (4) bzw. dessen Nabe (5) in Umfangsrichtung Anfasungen (20, 21) aufweisen.

4. Absperrklappe nach einem der Ansprüche 1 bis 3, dadurch gekennzeichnet, dass die Dichtstege (15, 16) eine Stahleinlage (23) besitzen.

## Claims

1. A hinged shutoff valve comprising bearing bushings (2), which are inserted in the valve housing (1) and in which a valve shaft (3) is mounted, which carries the valve disc (4), wherein each of which bearing bushings (2) has in its outside peripheral surface two peripheral grooves (6, 7) for receiving sealing rings (10; 11, 12), and has between said peripheral grooves two diametrically opposite axial grooves (8, 9) for receiving sealing strips (15, 16), the inner peripheral groove (7) is disposed adjacent to the valve housing, the outer peripheral groove (6) is disposed adjacent to the hub (5) of the valve disc, said hub surrounds that end of the bearing bushing which protrudes into the interior of the valve housing, and said two axial grooves (8, 9) are disposed adjacent to that axial plane which is defined by the closing position of the valve disc, characterized in that the outer peripheral groove (6) receives two superimposed sealing rings (11, 12), the upper one (12) of which consists of a strip of PTFE (polytetrafluoroethylene) or the like, whichis narrower than the outer peripheral groove (6) receiving said strip and which with its free ends (13) forms a joint (14) that is oblique to the peripheral direction, so that the strip ends are adapted to shift relative to each other and the strip which is closed to form a sealing ring can adapt itself to length changes without causing the joint to gape.

2. A hinged shutoff valve according to claim 1, characterized in that the axial grooves (8, 9) extend beyond the peripheral grooves (6,7) and the sealing strips (15, 16) inserted into the axial grooves (8, 9) are formed adjacent to the crossing with recesses (17, 18) which correspond to the peripheral grooves and constitute means (19) for retaining the sealing rings (10; 11, 12) without backlash.

3. A hinged shutoff valve according to claim 1 or 2, characterized in that the sealing strips (15, 16) are formed with chamfers (20, 21) in the region in which they contact the valve disc (4) of its hub (5).

4. A hinged shutoff valve according to any of claims 1 to 3, characterized in that the sealing strips (15, 16) have a steel insert (23).

## Revendications

1. Clapet d'isolement muni de coussinets (2) insérés dans le corps de clapet (1) pour l'arbre de clapet (3) portant le volet de clapet (4), ces coussinets (2) présentant chacun à la paroi latérale extérieure deux gorges circonférentielles (6, 7) pour l'insertion d'anneaux d'étanchéité (10; 11, 12) et, entre ces gorges circonférentielles, deux rainures axiales diamétricalement opposées (8, 9) pour l'insertion de baguettes d'étanchéité (15, 16) la gorge circonférentielle intérieure (7) étant située dans la région du corps de clapet et la gorge circonférentielle extérieure (6) dans la région du moyeu (5) du volet de clapet, qui s'applique par dessus l'extrémité des coussinets qui s'avance à l'intérieur du corps de clapet, les deux rainures axiales (8, 9) étant disposées dans la région du plan axial défini par la position de fermeture du volet de clapet, caractérisé par le fait que la gorge circonférentielle extérieure (6) loge deux anneaux d'étanchéité superposés (11, 12) dont celui du haut (12) est formé d'une bande de PTFE (polytétrafluoréthylène) ou matière similaire, qui est plus étroite que la gorge circonférentielle extérieure (6) qui la loge et forme par ses extrémités libres (13) un joint (14) oblique relativement à la direction circonférentielle, de sorte qu'un coulissement latéral des extrémités de bande est permis, ce qui fait que la bande, fermée en un anneau d'étanchéité, peut s'adapter à des variations de longueur sans causer un baillement du joint.

2. Clapet d'isolement selon la revendication 1, caractérisé par le fait que les rainures axiales (8, 9) arrivent jusqu'au delà des gorges circonférentielles (6, 7) et que les baguettes d'étanchéité (15, 16) qui y sont insérées présentent, dans la région de croisement avec les gorges circonférentielles, des évidements correspondants (17, 18) qui forment une monture exempte de jeu (19) pour les anneaux d'étanchéité (10; 11, 12).

3. Clapet d'isolement selon l'une des revendications 1 et 2, caractérisé par le fait que les baguettes d'étanchéité (15, 16) présentent des biseaux (20, 21) en direction circonférentielle dans la région axiale de contact avec le volet de clapet (4) ou son moyeu (5).

4. Clapet d'isolement selon l'une des revendications 1 à 3, caractérisé par le fait que les baguettes d'étanchéité (15, 16) présentent une armature d'acier (23).

# FIG.1

# FIG. 2

# FIG.3

# FIG.4

0 056 222